# EUROPEAN PATENT SPECIFICATION

(11) **EP 1 008 005 B1**
(45) Date of publication and mention of the grant of the patent: **14.11.2001**
(21) Application number: 97944469.2
(22) Date of filing: 26.09.1997
(51) Int. Cl.: G02B 21/22, G02B 23/10

(54) **OPTICAL IN SITU INFORMATION SYSTEM**
IN SITU OPTISCHES INFORMATIONSSYSTEM
SYSTEME D'INFORMATION OPTIQUE IN SITU

(30) Priority: 27.09.1996 US 26822 P
(43) Date of publication of application: 14.06.2000
(73) Proprietor: Leica Microsystems Inc., Depew, NY 14043 (US)
(72) Inventor: CHANDRA, Subhash, Armonk, NY 10504 (US)
(74) Representative: Reichert, Werner F., Dr.
(86) International application number: US9717264
(87) International publication number: WO9813716

(56) References cited:
- WO-A-88/04786
- WO-A-88/04788
- US-A- 4 202 037
- US-A- 4 274 092
- US-A- 4 567 478
- US-A- 4 722 056
- US-A- 4 994 794
- US-A- 5 307 202
- PATENT ABSTRACTS OF JAPAN vol. 096, no. 010, 31 October 1996 -& JP 08 160311 A (NIKON CORP), 21 June 1996,

## Description

### Background of the Invention

### 1. Field of the Invention

The present invention relates to an optical in situ information system. In particular, the present invention relates to a system that presents a wide variety of information (synthetic objects) in situ with a field of view of a view looking through an optical system, such as a microscope or a different type of viewing device with arbitrary magnification.

### 2. Description of the Related Art

There are several types of conventional systems that enable a viewer to view synthetically produced pictures. One such type of conventional system is a virtual reality system. In such systems, stereo pairs of a scene are totally synthesized (generated) with computers, and then viewed through a viewer with a binocular viewing device. In virtual reality systems, no attempt is made to overlay the synthetic view onto a view of real, bright objects. In fact, typically virtual reality systems are used in a dark environment, so that synthetic images of high brightness are not needed.

Another type of conventional system is a head-mounted display, as used by pilots and the like. In such systems, the objects in the field of view of the pilot are so distant that they do not produce a perceptible stereo-effect. Consequently, the field of view is essentially a two-dimensional plane without any depth perception. As a result, the synthetic pictures superimposed over the pilot's view do not have any requirements of depth perception.

Still another type of conventional system is a display built into surgical microscopes. Such systems are described, for example, in U.S. Patent No. 4,202,037, issued to E.M. Glaser, and in U.S. Patent No. 4,722,056, issued to Roberts et al. Glaser describes a system for simultaneous viewing (without aligned overlay) of computer generated information in the field of view of a surgical microscope. Glaser's binocular stereoscopic microscope is used for viewing a real object on a slide that contains a preparation in combination with an image of a synthetic object. Roberts describes a method of producing aligned overlays. This method is limited to overlays of two-dimensional pictures correctly aligned only in the focal plane of the microscope. In principle, Roberts' method is similar to the head mounted displays used by pilots, and only provides a monoscopic view.

WO-A-88 04786 discloses an enhanced-image operating microscope. The binocular stereoscopic operating microscope disclosed in WO-A-88 04786 is used for viewing both a real object and a synthetic object, based on an actual angle of the real object with respect to the viewer that looks through the microscope. The microscope includes an illuminator, an objective lens, a magnification changer, real time image processing devices, displays, combiners, and oculars.

US Patent No. 5,307,202 discloses a conventional stereoscopic apparatus in the form of a stereo microscope that detects differences between substantially identical photographs. The microscope uses first and second objective lenses that receive light reflected off of objects.

US Patent No. 4,994,794 discloses another conventional apparatus for displaying data using a binocular head-up display system.

WO-A-88 04786 discloses yet another conventional stereoscopic apparatus that provides an image of an object that is obscured by a layer of material that is opaque to visible light, but which is substantially transparent to non-visible penetrating radiation.

### Summary of the Invention

One object of the present invention is to provide a sufficient light capability to view a synthetic image against a bright real image.

Another object of the present invention is to provide a stereoscopic view of a combined image of a synthetic image with a real image.

Still another object of the present invention is to provide a stereoscopic, combined image of a three-dimensional synthetic image with a three-dimensional real image.

The present invention as identified by claim 1 relates to an apparatus by which computer generated images of synthetic three dimensional objects can be correctly overlayed and aligned over the images of real, three-dimensional objects in the field of view of a viewer. The embodiments described herein also include many novel features and techniques which will improve brightness, contrast, resolution, ease of adjustment, and operation over the conventional systems for aligned and unaligned overlays of two dimensional as well as three dimensional objects.

The apparatus includes a measure of generating a synthetic stereoscopic pair of pictures of a three-dimensional synthetic object which correspond to the synthetically produced three-dimensional picture. The apparatus also includes a measure of respectively combining the synthetic stereoscopic pair of pictures with a real stereoscopic pair of pictures which correspond to respective images the real object, the real stereoscopic pair of pictures being respectively obtained from two oculars of a microscope. By this apparatus, the synthetically produced picture is made to overlay the images of the real object over a three-dimensional space and not just over a single focal plane.

### Brief Description of the Drawings

These and other objects and advantages of the invention will become more fully apparent from the following detailed description when read in conjunction with the accompanying drawings with like reference numerals indicating corresponding parts throughout, and wherein:
Figure 1 shows a conventional viewing system using a microscope;
Figure 2 shows a conventional stereoscopic viewing system using a microscope in order to achieve a stereoscopic image;
Figure 3 shows a system for generating an overlay of images in a single focal plane according to a first embodiment of the invention;
Figure 4 shows a system for generating a stereoscopic image according to either a second or third embodiment of the invention; and
Figures 5A and 5B shows a difference in the mapping of LCD pixels for a synthetic image between the second and third embodiments, with respect to a reference plane and a different plane.

### Detailed Description of the Preferred Embodiments

The present invention relates to an optical in situ information system, which presents a wide variety of information (synthetic objects) in situ with the field of view of a viewer looking through an optical system such as a microscope or other type of viewing device with arbitrary magnification. The term "microscope" used throughout will be interpreted to include microscopes, binoculars, as well as optical systems attached to goggles. The term "synthetics objects" is used throughout to emphasize that the information displayed by the present invention is synthesized with computers and electronics, and it may represent two-dimensional as well as three-dimensional objects.

In a usual operation of a microscope, light from an object (i.e., source of information) in the object space of the microscope enters the microscope objective and exits the oculars of the microscope for viewing the image of the object. In an extension of this concept, light is directed towards an object 100 by a light source 105. A portion of the light directed towards the object 100 reflects off of the object 110 and enters a microscope 110.

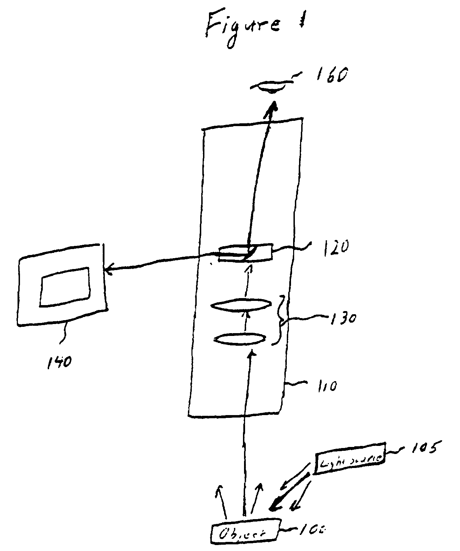

The light that enters the microscope 110 is split by a beam splitter 120, after passing through oculars 130. One portion of the output from the beam splitter 120 is directed to an imaging device 140, such as an electronic camera, as shown in Figure 1. The other portion of light output from the beam splitter 120 is directed to an eye 160 of a viewer. The electronic camera 140 may be used for either viewing the image on a TV monitor or for electronic analysis of the image.

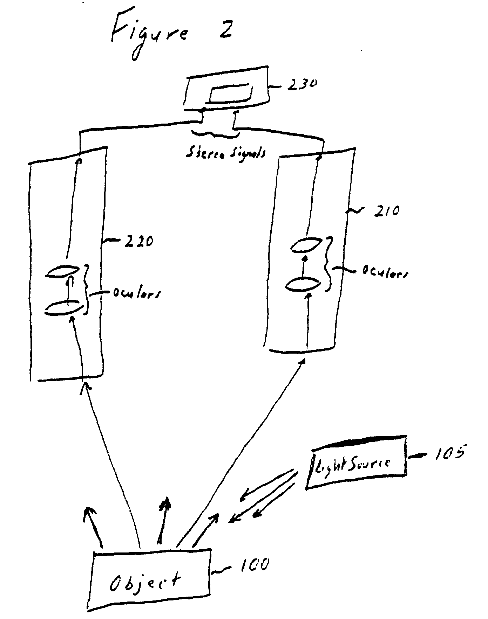

For stereoscopic viewing of the object, the object is imaged from two different angles, and viewed through two oculars to form a stereoscopic image of the object. Figure 2 shows a conventional use of a first microscope 210 and a second microscope 220, which together provide stereo signals to a TV monitor 230, in order to obtain a stereoscopic image of the object.

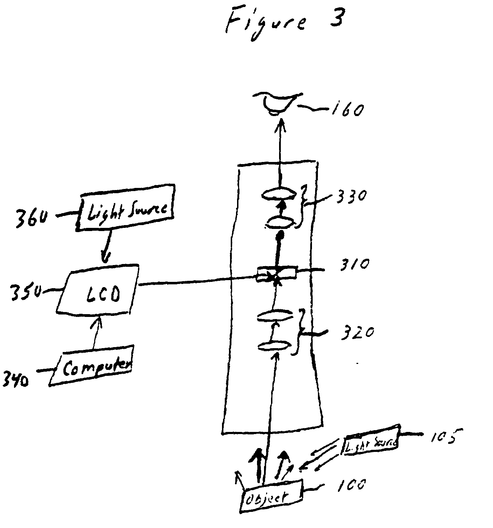

A first embodiment of the invention corresponds to a system for simultaneous viewing of a real object and a synthetic object. In the first embodiment, light from two separate sources is combined by an optical combiner 310, as shown in Figure 3. The first source of light is a synthetic image, created by a computer 340 that outputs a video signal to an LCD 350, where the LCD 350 is illuminated by a light source 360. The output of the LCD 350 is combined with light received from the object 100 via the objective lenses 320. The combined light output from the optical combiner 310 passes through an ocalar 330, which focuses the light so that both objects can be viewed simultaneously in the field of view of a viewer 160. In Figure 3, the ocular 330 and the objective 320 are both shown as having two separate lens spaced apart from each other, but one of ordinary skill in the art will recognize that many different types of oculars and objectives may be utilized while keeping within the scope of the invention.

In the first embodiment, one of the images being viewed corresponds to an image from a real object, while the other image being viewed corresponds to a synthetically produced picture or text input through electronics, such as created using a liquid crystal display (LCD). In the first embodiment as described above, simultaneous viewing of a real object and a synthetic object is thereby achieved. By the use of the LCD 350 with the appropriate amount of light applied to it by the light source 360, one is able to clearly view a synthetic image overlayed with a bright, real image from the object 100.

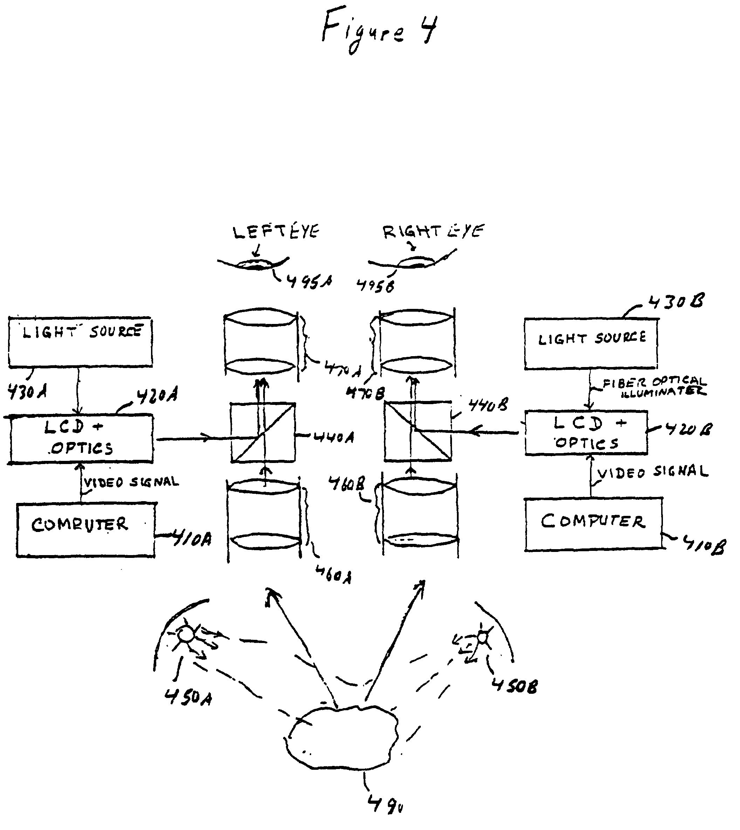

In order to achieve stereoscopic viewing, a second embodiment of the invention uses two separate systems - one for the left eye and one for the right eye, with the two images parafocalized to produce an overlay of images onto a single focal plane for viewing by a viewer. Figure 4 shows a system according to a second embodiment of the invention, in which stereoscopic viewing is achieved.

The second embodiment includes a first computer 410A, which outputs electrical signals (for example, a video signals) responding to a "left eye synthetic image" to LCD and Optics Unit 420A. LCD and Optics Unit 420A includes a matrix array of LCD pixels, as well as optics for outputting the light from the pixel array at a particular magnification and brightness. LCD and Optics Unit 420A receives light from Light Source 430A, via a fiber optic cable (or cables) or the like, and outputs an illuminated synthetic image to beam combiner 440A.

Illuminators 450A and 450B provide light in a direction of a real object 490. Illuminators may be configured as lamps that output light across a wide optical spectrum. Some of the light incident on the real object 490 is reflected in a direction towards Objectives 460A and 460B. Objective 460A is an objective lens for focusing light to be eventually directed to a left eye of a viewer, and objective 460B is an objective lens for focusing light to be eventually directed to a right eye of a viewer.

Light output from objective 460A is directed to beam combiner 440A, where the "real image" from the real object is combined with the "synthetic image" received from the LCD and Optics Unit 420A. The combined "synthetic and real" light passes through ocular lenses 470A, and is focused onto a left eye 495A of the viewer.

Similarly, reflected light is also received by objective 460B, and is directed to beam combiner 440B. Second computer 410B creates a video signal for a "right eye synthetic image", which is sent to LCD and Optics Unit 420B. LCD and Optics Unit 420B also receives light from Light Source 430B, via a fiber optic connection or the like. The illuminated synthetic image output from LCD and Optics Unit 420B is sent to beam combiner 440B, where it is combined with the real image corresponding to light received from the real object. In the second embodiment, the LCDs of LCD and Optics Units 420A and 420B correspond to a matrix of pixels, arranged in a two-dimensional grid. The combined light from beam combiner 440B passes through ocular lenses 470B, and is focused onto a right eye 495B of the viewer.

By the system according to the second embodiment, the viewer can see a stereoscopic viewing of a real image superimposed with a synthetic image. Such a configuration is useful in many medical procedures. For example, a CATSCAN or a selected portion thereof, as a synthetic image, can be superimposed onto a real image corresponding to an actual patient situated in a viewing region of the system according to the second embodiment.

In the second embodiment, a calibration is performed so that the synthetic image can be properly imaged onto one or more pixels of the LCD array in the LCD and Optics Units. That calibration may be performed in a number of ways, such as providing a test image at a particular distance and angle with respect to the viewing system, and then determining where that test image appears on an X-Y array of LCDs. Based on this information, which is taken at a variety of angles of objects with respect to the viewing system, a synthetic image can be properly superimposed onto a real image by knowledge of the actual position of the real object with respect to the viewing system as well as knowledge of which pixel (or pixels) of the LCD array would be illuminated by the object at that position.

In the second embodiment, a reference plane corresponds to the plane of the LCD array of pixels, and the synthetic image is determined based only on where it would appear on the reference plane, and no other plane. Thus, the combined image of the real image and the synthetic image is exactly valid for a real object on the reference plane, and may not provide an acceptable overlay of the synthetic image onto the real image when the real object is not on the reference plane. The second embodiment does not require complex calculations, however, and may be acceptable for some situations where an exact overlay is not necessary. However, where a precise overly is required, such as in complex surgery, for example, a different scheme is desired.

In that regard, a third embodiment of the invention produces a three-dimensional overlay of a synthetically produced picture over a three-dimensional image of the real object. The third embodiment has a structure similar to the second embodiment of Figure 4, but the computer in the third embodiment provides the means for creating a three-dimensional synthetic image that can be superimposed onto the three dimensional real image, and which will appear realistic when the real object is viewed from any angle and/or distance.

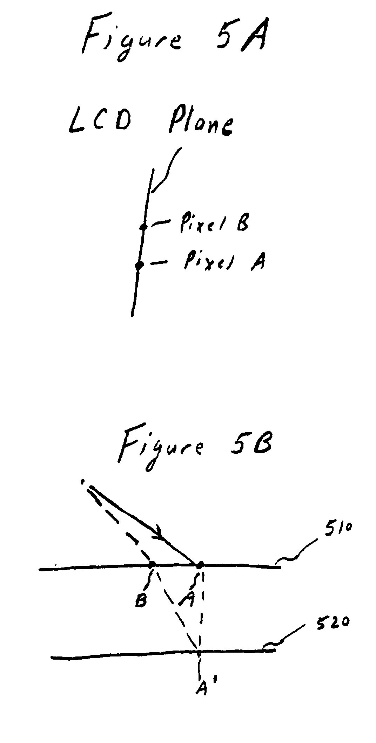

First, a synthetic stereoscopic (left and right eye) pair of pictures of the synthetic object is calculated by the computers 410A and 410B, and then displayed on the LCDs 420A and 420B, taking into account the parameters of the viewing optical system. These parameters may be calculated from pre-calibrated correspondence between points in the three-dimensional object space and points in a plane of the LCDs. This method is illustrated by Figures 5A and 5B, which show a correspondence between the real object space and the LCD space. Referring now to Figure 5B, as the real object moves from a reference plane 510 to a different plane 520 (i.e., at a different distance with respect to the microscope), a point A' on the different plane 520 maps to a different pixel position B on the reference plane 510.

In the second embodiment, the synthetic object is considered to be a two dimensional object in the focal plane of the microscope. Therefore, in the calibration process of the second embodiment, a correspondence between the points in the focal plane of the microscope and points in the LCD plane is determined. In case the actual synthetic object is a three dimensional object, either a cross-section of this three dimensional object or a collapsed projection of this three dimensional object is displayed in the LCDs to produce an overlay in the focal plane of the microscope.

In the second embodiment, the point A' on the different plane 520 would be collapsed to the point A on the reference plane 510, since the synthetic image is only overlayed in a two-dimensional manner onto the real image. Figure 5A shows the locations of a pixel A and an adjacent pixel B on an LCD plane, where the LCD plane includes a plurality of LCDs (not shown) positioned in a matrix arrangement. The intersection of the dashed and dotted lines in Figure 5B corresponds to a location of the viewing system with respect to the reference plane 510 and the different plane 520.

If the real object is on the reference plane, then the pixel illuminated by the system according to the second embodiment would correspond to the pixel illuminated by the third embodiment. However, if the object is moved a particular distance away from the reference plane (i.e., either closer to or farther away from the microscope), then the pixel illuminated by the second embodiment would be different from the pixel illuminated by the third embodiment, as shown in Figure 5B. In essence, the LCD array is configured to make the synthetic image appear at a particular distance with respect to the microscope, with that particular distance corresponding to the reference plane.

In the third embodiment, the means for determining the mapping of a three-dimensional real space onto a two-dimensional LCD pixel array is preferably performed beforehand by calibration, based on real images received from a real test object, and by taking into account the distance and angle of the viewing system with respect to the real test object. At the same time, the computers 410A and 410B determine, for the X-Y grid of LCD pixels on the LCDs 420A and 420B, where the real object would appear (i.e., which pixel in the LCD array should be illuminated) in order to create an appropriate three-dimensional synthetic image to be overlayed onto the three-dimensional real image from the object 490.

The system according to the third embodiment takes into account the depth and angle of the viewing system, while the system according the second embodiment collapses the synthetic image onto a single (reference) plane. In other words, in the third embodiment, the X,Y,Z object space corresponds to a particular pixel number (X_{L}, Y_{L} coordinate) on the left LCD array, and a particular pixel number (X_{R}, Y_{R}) on the right LCD array. The third embodiment provides a three dimensional mapping onto the useful space, while the second embodiment provides a two dimensional mapping of the synthetic image onto the useful space. In the third embodiment, the position of the LCD with respect to the optics in the LCD and Optics Units 420A and 420B can be adjusted to make light from the LCD appear (that is used to create the synthetic image) to come from a suitable plane in the real object (such as in the middle of the real object, or at another plane, which in the third embodiment is operator-adjustable). The system thus provides a more comfortable viewing of the overlay of the synthetic image with the real image.

In the second and third embodiments, the oculars may also be adjusted so that light appears to be at a particular distance away, and not necessarily at an "infinite" distance away. That way, a realistic three-dimensional viewing of an object together with a three-dimensional synthetic image may be achieved, where the viewer actually "feels" the distance and angle that he or she is with respect to the object.

In the third embodiment, the synthetic image, as viewed by human eyes, is made to overlay the image of the real object over the useful three-dimensional space, and not merely over a single focal plane, as in the second embodiment.

The means for generating synthetic stereoscopic pairs of pictures can be performed via liquid crystal displays (LCDs), or other similar ways. Note that cathode ray tubes (CRTs) generally do not provide the amount of light and resolution necessary to superimpose a synthetic image onto a real, bright image, and so that is why LCDs are preferred in each of the embodiments described herein. In each of the embodiments, fiber optics are used in order to provide a light conduit between the light source and the liquid crystal displays, thereby allowing a strong source of light to be placed at a distance. The present invention may also include imaging means for imaging the distal tip of the optical fiber at the entrance pupil of the viewing ocular system, to allow an efficient coupling of light to the eye. The present invention may include adjusting means for adjusting the LCD illumination intensity, so as to equalize the left and right LCD brightness level. The light adjusting means may be implemented within the light sources that provide light for the LCDs. By proper light adjusting, a common brightness level can be made compatible with the illuminated field of view of the microscope.

In the second embodiment, the left and right synthetic images are parafocalized to a common reference plane, while in the third embodiment, the left and right synthetic images are parafocalized to an optimum reference plane in the real object space. The magnification of the left and right synthetic images can be adjusted to match each other, via an adjusting means for left and for the right images. The magnification of the LCD display can also be adjusted via the optics provided in the LCD and Optics units, in order to adjust the ocular field of view to be covered by the display images.

The present invention allows for calculating stereoscopic views from a data base defining: i) the synthetic three dimensional object, and ii) pre-calibrated correspondence between the three-dimensional space and the points in the plane of the LCDs. The data base is preferably stored in a memory that is accessible by a computer. The computer preferably has embedded software for performing the above-mentioned calculation of the stereoscopic views. A transformation matrix may be utilized in order to determine which pixel in an X-Y array of pixels would be illuminated based on a particular angle and distance of the viewing system with respect to the real object.

The invention allows for the ability to adjust the contrast of the pictures produced by the LCDs (i.e., either lightening them or darkening them, as needed), based on the brightness of the real image from the real object.

The invention also may be configured with X, Y and theta adjusting means for making X, Y and theta adjustments so as to allow for an adjustable overlay of the left and right eye views of the synthetic images within the field of view of the ocular (i.e., zoom in or zoom out the size of the synthetic image overlayed on the real image).

The invention also may include measuring means for measuring the parameters of the system needed to overlay the left and right images.

Also, the parameters of the optical system containing variable lenses may be dynamically measured in order to dynamically maintain the overlay of the synthetic images in the field of view.

Still further, the present invention may also include dynamic measuring means for dynamically measuring the parameters of the optical system to dynamically maintain the overlay of the synthetic images in the field of view.

While embodiments have been described herein, modification of the described embodiments may become apparent to those of ordinary skill in the art, following the teachings of the invention, without departing from the scope of the invention. For example, the present invention has many applications, including: image guided surgery, image guided therapy, imaged guided diagnostics, telesurgery, robotic surgery, and inspection system to compare real objects with their three dimensional reference profiles.

## Claims

1. An apparatus for stereoscopic viewing of a real object and a synthetic object, the apparatus including an illuminator (450A, 450B) for illuminating a real object (490), first and second objective lenses (460A, 460B) for receiving light reflected off of the real object, a computer (410A, 410B) for creating a left eye and right eye stereoscopic synthetic image and for respectively outputting a first and second video signal as a result thereof, a first and a second liquid crystal display (420A, 420B) for respectively receiving the first and second video signals and for providing a first and second synthetic image, a first combiner (440A) for combining the first synthetic image with the received light from the first objective lens as a first combined signal, a second combiner (440B) for combining the second synthetic image with the received light from the second objective lens as a second combined signal, and first and second oculars (470A, 470B) for respectively receiving the first and second combined signals and for respectively directing the first and second combined signals to a left eye (495A) and a right eye (495B) of a viewer, so as to achieve a stereoscopic viewing, the apparatus further comprising:
a light source (430A, 430B) for outputting light; and
at least one fiber optic line for providing the light output from the light source to the first and second liquid crystal displays,
wherein the fiber optic line provides the light to the liquid crystal displays for creation of the left eye and right eye stereoscopic images.

2. The apparatus according to claim 1, further comprising light adjusting means for varying an intensity of the light output from the light source, so as to vary an intensity of the left eye and right eye stereoscopic synthetic images.

## Patentansprüche

1. Vorrichtung zum stereoskopischen Betrachten eines realen Objekts und eines synthetischen Objekts, wobei die Vorrichtung eine Beleuchtungseinrichtung (450A, 450B) zum Beleuchten eines realen Objekts (490) umfasst, erste und zweite Objektivlinsen (460A, 460B) zum Empfangen des von dem realen Objekt reflektieren Lichts, einen Computer (410A, 410B) zum Erzeugen eines synthetischen Stereobildes für dass linke und rechte Auge und zum Ausgeben eines entsprechenden ersten bzw. zweiten Videosignals, weiterhin eine erste und eine zweite Flüssigkristallanzeige (420A, 420B) zum Empfangen des ersten bzw. zweiten Videosignals und zum Erzeugen eines ersten und zweiten synthetischen Bildes, einen ersten Mischer (440A) zum Kombinieren des ersten synthetischen Bildes mit dem von der ersten Objektivlinse empfangenen Licht als ein erstes kombiniertes Signal, einen zweiten Mischer (440B) zum Kombinieren des zweiten synthetischen Bildes mit dem von der zweiten Objektivlinse empfangenen Licht als ein zweites kombiniertes Signal, und erste und zweite Okulare (470A, 470B) zum Empfangen eines ersten bzw. zweiten kombinierten Signals und zum Richten des ersten und zweiten kombinierten Signals zu einem linken Auge (495A) bzw. zu einem rechten Auge (495B) eines Betrachters, so dass eine Stereoansicht entsteht, **dadurch gekennzeichnet, dass** die Vorrichtung folgendes umfasst:
eine Lichtquelle (430A, 430B) zur Ausgabe von Licht, und
mindestens einen Lichtleiter zum Beaufschlagen der ersten und zweiten Flüssigkristallanzeige mit dem von der Lichtquelle ausgegebenen Licht, wobei der Lichtleiter das Licht den Flüssigkristallanzeigen zum Erzeugen der Stereobilder für das linke und rechte Auge bereitstellt.

2. Vorrichtung nach Anspruch 1, **gekennzeichnet durch** Lichteinstellmittel zum Verändern der Helligkeit der Lichtausgabe von der Lichtquelle, derart, dass die Helligkeit der synthetischen Stereobilder für das linke und das rechte Auge veränderlich ist.

## Revendications

1. Appareil pour la visualisation stéréoscopique d'un objet réel et d'un objet de synthèse, l'appareil comprenant un dispositif d'éclairage (450A, 450B) pour éclairer un objet réel (490), des premier et second objectifs (460A, 460B) pour recevoir la lumière réfléchie par l'objet réel, un ordinateur (410A, 410B) pour créer une image de synthèse stéréoscopique pour l'oeil gauche et pour l'oeil droit et pour respectivement émettre un premier et un second signal vidéo en résultat de cela, un premier et un second affichage à cristaux liquides (420A, 420B) pour respectivement recevoir les premier et second, signaux vidéo et pour produire une première et une seconde image de synthèse, un premier moyen de combinaison (440A) pour combiner la première image de synthèse à la lumière reçue du premier objectif en tant que premier signal combiné, un second moyen de combinaison (440B) pour combiner la seconde image de synthèse à la lumière reçue du second objectif en tant que second signal combiné, et des premier et second occulaires (470A, 470B) pour respectivement recevoir les premier et second signaux combinés et pour respectivement diriger les premier et second signaux combinés vers un oeil gauche (495A) et un oeil droit (495B) d'un spectateur afin d'obtenir une visualisation stéréoscopique, l'appareil comprenant de plus:
une source de lumière (430A, 430B) pour émettre de la lumière; et
au moins une ligne optique à fibre pour appliquer la lumière à la sortie de la source de lumière aux premier et second affichages à cristaux liquides,
où la ligne optique à fibre applique la lumière aux affichages à cristaux liquides pour la création des images stéréoscopiques pour l'oeil gauche et l'oeil droit.

2. Appareil selon la revendication 1, comprenant de plus un moyen d'ajustement de la lumière pour varier une intensité de la lumière à la sortie de la source de lumière, afin de varier une intensité des images stéréoscopiques de synthèse pour l'oeil gauche et l'oeil droit.
